# EUROPEAN PATENT SPECIFICATION

(11) **EP 3 352 565 B1**
(45) Date of publication and mention of the grant of the patent: **18.12.2019**
(21) Application number: 16801004.9
(22) Date of filing: 20.10.2016
(51) Int. Cl.: A01K 13/00, A01L 5/00, A01L 9/00

(54) **ANIMAL SHOE**
SCHUH FÜR TIERE
PARURE DE PIED POUR UN ANIMAL

(30) Priority: 22.10.2015 GB 201518754
(43) Date of publication of application: 01.08.2018
(73) Proprietor: Forbovi Limited, IV25 3SD (GB)
(72) Inventor: WALKER, Valerie, Dornoch, IV25 3SQ (GB)
(74) Representative: McIlroy, Steven David
(86) International application number: PCT/GB2016/053283
(87) International publication number: WO 2017/068354

(56) References cited:
- EP-A1- 0 212 445
- EP-A1- 2 774 480
- WO-A1-2009/120085
- US-A1- 2003 070 403

## Description

The present invention relates to an animal shoe and particularly, though not exclusively, to a therapeutic shoe for cloven-hooved lactating animals.

The incidence of foot disease in cloven-hooved farm animals - particularly dairy herds - is unfortunately very common. Examples of foot diseases include ulcers of the sole, heel or toe; digital dermatitis; interdigital growths; foul; and necrosis. Resulting lameness is a major worldwide problem facing the dairy farming industry which brings many costs for the dairy farmer including loss of milk production, higher veterinary bills, and additional labour costs for monitoring/medicating/culling the herd to contain disease. This represents a significant animal welfare issue which creates stress for both the animals and the farmer.

Efforts have of course been made to overcome or ameliorate the impact of foot disease for cloven-hooved farm animals. For example, hoof trimming and the application of foot blocks can be used as a preventative measure to ensure that the weight bearing surfaces of the foot are balanced. Hoof bathing systems are common whereby the herd is guided through a chemical bath containing antimicrobial ingredients for disinfecting and cleansing the hooves. However, such chemical baths may have only limited effect, particularly where an open lesion is present on an animal's hoof. It is impractical to maintain any degree of cleanliness immediately after exiting a chemical bath and any bacterial pathogens which are removed are unavoidably quickly replaced. Further disadvantages associated with chemical baths include their relatively high costs and concerns surrounding their toxicity both in respect of their potential harm to animals themselves, and to the environment. These and other measures are set out in a publication titled: *"*Hoof Care: field guide" published in 2014 by DairyCo, a division of the United Kingdom's Agriculture and Horticulture Development Board.

Furthermore, enclosed protective shoes have been developed for horses having certain adjustability features for accommodating different hoof geometry. An example of such an enclosed protective shoe for a horse is disclosed in EP 2 774 480 A1 (Equine Fusion AS).

According to the present invention there is provided a therapeutic shoe for cloven-hooved lactating animals, said therapeutic shoe comprising:
a sole portion for supporting undersides of an animal's medial and lateral claws;
a vamp portion connected to the sole portion for at least partially enveloping an animal's hoof wall between its toe, heel and coronary band;
a quarter portion connected to the vamp portion for at least partially enveloping an animal's front and lateral pastern sections; and
a heel portion connected to both the vamp and quarter portions for at least partially enveloping an animal's heel and the area beneath the dew claws;
wherein the material of the shoe at said heel portion is relatively more deformable than the material of the shoe at any of said sole, vamp or quarter portions; and wherein the foremost part of the vamp portion is divided into separate medial and lateral sections for accommodating an animal's medial and lateral claws.

Advantageously, such an arrangement avoids the application of excess pressure to this sensitive area of the hoof anatomy. It will also be appreciated that such a division within the vamp section creates two separate internal spaces within the shoe which maintains a physical separation between the medial and lateral claws. This arrangement may be beneficial to the treatment of certain types of hoof disease.

Optionally, the increase in relative deformability of the heel portion is achieved by reducing the thickness and/or increasing the elasticity of the material of the shoe at said heel portion relative to that of the shoe at any of said sole, vamp or quarter portions.

By reducing the thickness and/or increasing the elasticity of the shoe material at this region the ligaments and blood supply leading to the remainder of the hoof is unimpeded which is an important factor in promoting the healing process.

Optionally, the relatively thinner material of the shoe at said heel portion has a variable thickness wherein a portion thereof most proximate the dew claws is relatively thinner and more flexible than the material of the remainder of the heel portion.

In one embodiment, the thickness of the heel portion will reduce progressively with increasing distance from the sole/heel junction towards the dew claws. This balances the need for sufficient support near the base of the heel with the increasing sensitivity of the hoof anatomy proximate the dew claws.

Additionally or alternatively, the increase in relative deformability of the heel portion is achieved by oversizing the heel portion.

The oversized material may be loose-fitting or baggy such that an appropriately tensioned fastener - such as an elastic band - is used to gather it against the animal's heel in a pleated or concertina fashion. Alternatively, the material may be oversized in the sense that it is provided with an inherent elasticity permitting it to be temporarily, e.g. manually, stretched during fitting or removal before resiliently shrinking against the surface of an animal hoof.

Optionally, the material of the shoe at said sole portion is relatively thicker and/or more rigid than the material of any other part of the shoe.

Optionally, an auxiliary connection is provided between the medial and lateral sections to resist and/or limit their physical separation.

Optionally, the auxiliary connection is in the form of a web connected between opposite inner surfaces of the medial and lateral sections.

Alternatively, the auxiliary connection is in the form of band connected between the medial and lateral sections.

In one embodiment, the web and/or band is provided with a degree of elasticity tending to return the medial and lateral sections to a relatively close proximity. In an alternative embodiment, the web and/or band is relatively rigid tending to maintain the medial and lateral sections in a constant proximity to one another.

Optionally, the outer surface of the sole is provided with a textured or patterned tread.

Optionally, the inner hoof-facing surface of the sole is provided with a textured or patterned tread.

Optionally, a sealable aperture is provided on the front of the shoe.

Optionally, the sealable aperture overlies the front of the vamp and/or quarter portion(s).

Advantageously, the sealable aperture is in the form of a plug which can be opened to permit ventilation of the enclosed hoof and/or to facilitate the introduction of a medicament.

Optionally, the entire shoe is integrally formed from a single piece of rubber or elastomeric material.

The absence of seams or joins ensures that the shoe remains fully waterproof which is advantageous in terms of promoting the healing process for an encapsulated injured or diseased hoof.

Optionally, the rubber or elastomeric material is breathable.

It may or may not be desirable for the material of the shoe to be breathable. It is therefore envisaged that all or part of the shoe - e.g. the vamp portion - may be provided with an outer non-breathable layer which is removable to reveal an underlying perforated or breathable layer.

Optionally, at least part of the material of the shoe is transparent.

By providing a transparent shoe, or viewing windows at appropriate position(s), it becomes possible to monitor the healing process and/or view the accuracy of placement of medicaments without the need to remove the shoe. This reduces the workload for the farmer or veterinary professional and avoids unnecessary stress or discomfort to the animal.

Optionally, a fastener surrounds the shoe at the quarter portion.

By providing a suitable fastener, the shoe can be used on hooves of different girths. A fastener also allows the heel portion to be provided deliberately oversized and then appropriately tightened. This further ensures that unnecessary pressure in the sensitive hoof anatomy immediately beneath the dew claws.

Optionally, an integral or separable leg portion is connected to the quarter and heel portions for enveloping an animal's dew claws and at least part of its leg above said dew claws.

Optionally, two apertures are provided in a rear part of the leg portion corresponding with the positions of the dew claws.

In certain circumstances it may be desirable to increase the height of the shoe, e.g. to avoid ingress of liquid at its opening, or to cover a lesion above the dew claws. However, it may be desirable to allow the dew claws to extend outside of the shoe.

Further features and advantages of the present invention will become apparent from the claims and the following description.

Embodiments of the present invention will now be described by way of example only, with reference to the following diagrams, in which:-
Fig. 1 is side view of a shoe of the present invention encapsulating an animal hoof;
Fig. 2 is a rear view of the shoe of Fig. 1;
Fig. 3a is side view of an alternative shoe structure having separate medial and lateral sections for accommodating the medial and lateral claws;
Fig. 3b is an underside view of the shoe of Fig. 3a;
Fig. 4a is side view of an alternative shoe structure to that shown in Figs. 3a and 3b; and
Fig. 4b is an underside view of the shoe of Fig. 4a.

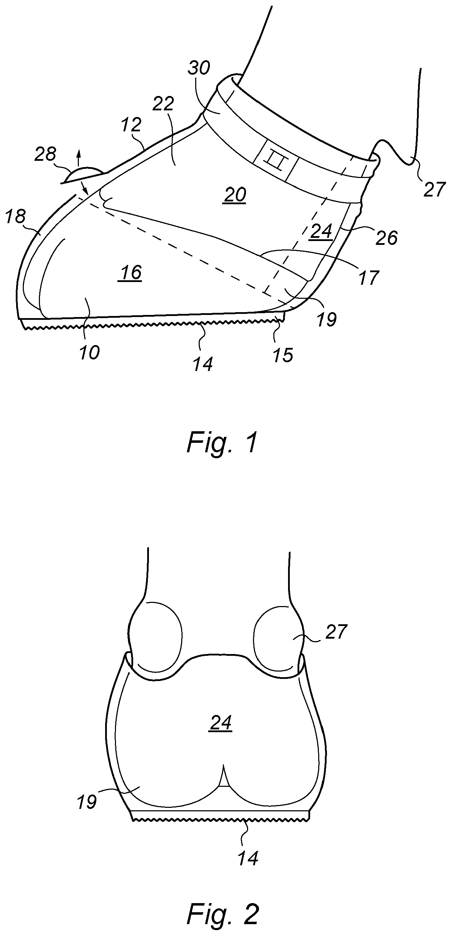

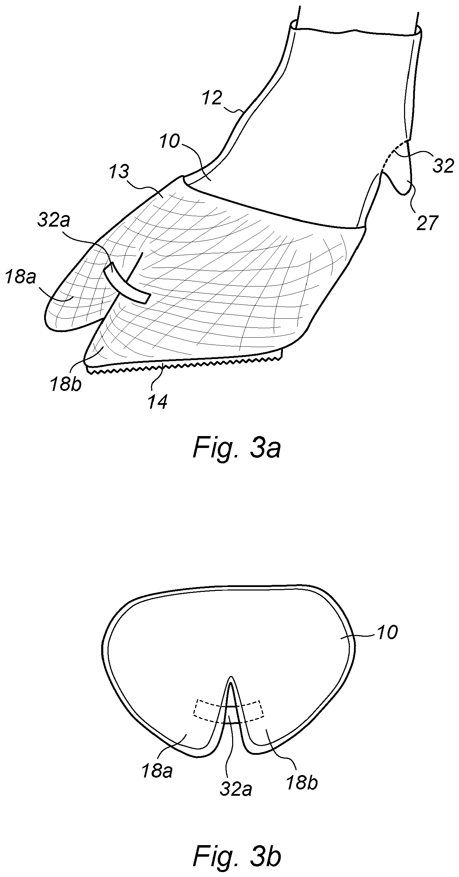

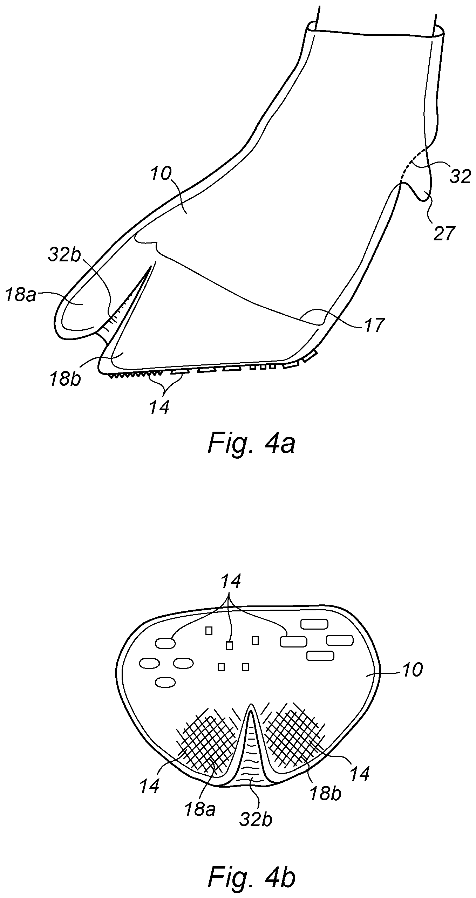

As shown in Fig. 1, an animal hoof 10 is encapsulated by a shoe 12 which may be notionally divided into at least four parts. The first notional part of the shoe is a treaded sole portion 14 formed from a relatively rigid elastomer or rubber material having a thickness which may, for example, fall within the range of 5 mm to 10 mm. The sole portion is shaped and dimensioned so as to correspond with the typical outline shape and size of a cloven-hooved animal's medial and lateral claws (e.g. see Figs. 3b and 4b). It will be appreciated that shoes having differently sized and shaped sole portions may be provided to accommodate different animal types and sizes.

The second notional part of the shoe 12 is a vamp portion 16 extending upwardly from the periphery of the sole portion 14. The forward part 18 of the vamp portion 16 extends upwards over the toe of the hoof and terminates at a point which approximately overlies the animal's coronary band 17. The rear/lateral part of the vamp portion 16 extends proximate to the rear part 15 of the sole portion 14. Accordingly, the upper extent of the notional vamp portion 16 tapers downwardly from front to back, i.e. terminating at a position corresponding very approximately to the anatomical position of an animal's coronary band 17 and heel bulb 19.

The third notional part of the shoe 12 is a quarter portion 20 extending upwardly from the upper extent of the forward and lateral sides of the vamp portion 16 to overlie an animal's front and lateral pastern sections 22.

The fourth notional part of the shoe 12 is a heel portion 24 connected to both the vamp and quarter portions 16, 20 for at least partially enveloping the soft, sensitive area 26 above the heel bulb 19 and below the dew claws 27 (see Fig. 2). The elastomer or rubber material forming the heel portion 24 is relatively thinner than, and hence more flexible than, that employed at any other part of the shoe 12. The thickness of the material within the heel portion 24 may decrease in either a step-wise or progressive/gradual fashion along a notional line extending from its junction with the sole portion 14 to its edge proximate the dew claws 27.

More generally, the thickness of all of the vamp and/or quarter portions 16, 20 may decrease in either a step-wise or progressive/gradual fashion with increasing height above the sole portion 15; and/or with increasing distance along a substantially horizontal line from the coronary band 17 at the front of the hoof 10.

By providing targeted areas of reduced thickness and increased flexibility, pressure points within sensitive areas of the hoof 10, or areas prone to disease or injury, can be minimised or avoided. This in turn ensures that blood flow and ligament movement is not impeded which therefore promotes blood flow and healing.

As shown in Fig. 1, a sealable aperture or plug 28 is provided at the front of the shoe 12 proximate the meeting point of the vamp and quarter portions 16, 20. The plug 28 may be opened to permit ventilation of the enclosed hoof which, under certain circumstances, may promote healing of a surface lesion. Also, the plug 28 facilitates the introduction of a medicament onto the surface of the hoof, e.g. an ointment or cream applied via a syringe.

All notional parts of the shoe 12 may be integrally formed from a single piece of rubber or elastomeric material. It may alternatively be formed from a plurality of different pieces of rubber and/or elastomeric which have been, e.g. heat-welded together to form a unitary shoe 12. In either case, the absence of visible seams or joins ensures that the shoe 12 remains fully waterproof which is advantageous in terms of promoting the healing process for an encapsulated injured or diseased hoof. It is envisaged that the vamp, quarter and heel portions 16, 20, 24 may, for example, have thicknesses which are greater than 0.1mm but less than 0.5mm.

Silver particles and/or other ingredients having antimicrobial properties may be incorporated within the material of the shoe to assist healing of an enclosed hoof. The entire shoe 12, or one or more parts thereof, may be transparent to allow part(s) of the enclosed hoof to be viewed without the need to remove the shoe 12.

A fastener 30 extends circumferentially around the quarter portion 20 and heel portion 24 for retaining the shoe 12 on the hoof. The fastener 30 can be used to tighten the shoe 12 to an appropriate extent dependent on the type and size of the animal whilst avoiding placing excess pressure on the sensitive area 26 between the animal's heel bulb 19 and dew claws 27.

An alternative means of encapsulating an animal hoof 10 within a shoe 12 is shown in Figs 3a and 4a. The forward part 18 of the vamp portion 16 is divided - below the height of the animal's coronary band 17 - into separate medial and lateral sections 18a, 18b for accommodating an animal's corresponding medial and lateral claws. This flexible structural arrangement affords natural movement of the medial and lateral claws as the animal walks. However, physically separating the medial and lateral claws may also be beneficial in some treatment scenarios.

In certain circumstances, it may be desirable to limit the degree to which the respective medial and lateral sections can be separated. As shown in Figs. 3a and 3b, a relatively rigid bar or band 32a is orientated horizontally and connects the medial and lateral sections 18a, 18b together at a vertical height approximately midway between the sole 14 and the animal's coronary band 17.

An alternative arrangement is shown in Figs. 4a and 4b, whereby the medial and lateral sections 18a, 18b are connected together by a relatively rigid (or elastic) interdigital web 32b. Advantageously, the web 32b may be formed integrally with the material of the shoe 12.

Although particular embodiments of the invention have been disclosed herein in detail, this has been done by way of example and for the purposes of illustration only. The aforementioned embodiments are not intended to be limiting with respect to the scope of the appended claims. It is contemplated by the inventor that various substitutions, alterations, and modifications may be made to the invention without departing from the scope of claims. Indeed, it is envisaged that individual features described above and illustrated in the drawings are, where the context allows, interchangeable with those of other embodiments. Furthermore, it is envisaged that different tread patterns may be provided on the sole 14 dependent upon factors such as animal type, the ground conditions and environment where an animal is located, and disease type. Multiple different tread patterns and/or heights may be provided on different regions of the sole 14 as illustrated schematically in Fig. 4b. Textured surfaces may also be provided on the inner surface of the sole of the shoe 12. As shown in Fig. 3a, a stiffening material may be applied over the external surface of the vamp, quarter and heel portions 16, 20, 24 to provide additional strength and durability. The stiffening material may be a bonded fabric or carbon fibre. Finally, in certain circumstances it may be desirable to increase the overall height of the shoe 12, e.g. to avoid ingress of liquid at its opening, or to cover a lesion situated above the dew claws. However, it may be desirable to allow the dew claws to extend outside of the shoe via a pair of apertures such as those illustrated in Figs. 3a and 4a.

## Claims

1. A therapeutic shoe (12) for cloven-hooved lactating animals, said therapeutic shoe comprising:
a sole portion (14) for supporting undersides of an animal's medial and lateral claws;
a vamp portion (16) connected to the sole portion (14) for at least partially enveloping an animal's hoof wall between its toe, heel (19) and coronary band (17);
a quarter portion (20) connected to the vamp portion (16) for at least partially enveloping an animal's front and lateral pastern sections (22); and
a heel portion (24) connected to both the vamp and quarter portions (16, 20) for at least partially enveloping an animal's heel (19) and the area beneath the dew claws (27);
wherein the material of the shoe (12) at said heel portion (24) is relatively more deformable than the material of the shoe at any of said sole, vamp or quarter portions (14, 16, 20); and **characterised in that** the foremost part (18) of the vamp portion (16) is divided into separate medial and lateral sections (18a, 18b) for respectively accommodating an animal's medial and lateral claws.

2. A therapeutic shoe (12) according to claim 1, wherein the increase in relative deformability of the heel portion (24) is achieved by reducing the thickness and/or increasing the elasticity of the material of the shoe (12) at said heel portion relative to that of the shoe at any of said sole, vamp or quarter portions (14, 16, 20).

3. A therapeutic shoe (12) according to claim 2, wherein the relatively thinner material of the shoe at said heel portion (24) has a variable thickness; and wherein a portion thereof most proximate the dew claws (27) is relatively thinner and more flexible than the material of the remainder of the heel portion (24).

4. A therapeutic shoe (12) according to any preceding claim, wherein the increase in relative deformability of the heel portion (24) is achieved by oversizing the heel portion.

5. A therapeutic shoe (12) according to any preceding claim, wherein the material of the shoe at said sole portion (14) is relatively thicker and/or more rigid than the material of any other part of the shoe.

6. A therapeutic shoe (12) according to any preceding claim, wherein an auxiliary connection is provided between the medial and lateral sections (18a, 18b) to resist and/or limit their physical separation.

7. A therapeutic shoe (12) according to claim 6, wherein the auxiliary connection is in the form of a web (32b) connected between opposite inner surfaces of the medial and lateral sections (18a, 18b).

8. A therapeutic shoe (12) according to claim 6, wherein the auxiliary connection is in the form of band (32a) connected between the medial and lateral sections (18a, 18b).

9. A therapeutic shoe (12) according to any preceding claim, wherein a sealable aperture (28) is provided on the front of the shoe.

10. A therapeutic shoe (12) according to claim 9, wherein the sealable aperture (28) overlies the front of the vamp and/or quarter portion(s) (16, 20).

11. A therapeutic shoe (12) according to any preceding claim, wherein the entire shoe is integrally formed from a single piece of rubber or elastomeric material.

12. A therapeutic shoe (12) according to claim 11, wherein the rubber or elastomeric material is breathable.

13. A therapeutic shoe (12) according to any preceding claim, wherein an integral or separable leg portion is connected to the quarter and heel portions (20, 24) for enveloping an animal's dew claws (27) and at least part of its leg above said dew claws.

14. A therapeutic shoe (12) according to claim 13, wherein two apertures (32) are provided in a rear part of the leg portion corresponding with the positions of the dew claws (27).

## Patentansprüche

1. Therapeutischer Schuh (12) für laktierende Paarhufer, wobei der therapeutische Schuh Folgendes umfasst:
einen Sohlenabschnitt (14) zum Stützen von Unterseiten der medialen und lateralen Klauen eines Tiers;
einen Oberlederabschnitt (16), der mit dem Sohlenabschnitt (14) verbunden ist, um die Hufwand eines Tiers zwischen seinem Zeh, seiner Ferse (19) und seinem Koronarband (17) mindestens teilweise zu umschließen;
einen Quartierabschnitt (20), der mit dem Oberlederabschnitt (16) verbunden ist, um den vorderen und lateralen Fesselabschnitt (22) eines Tiers mindestens teilweise zu umschließen; und
einen Fersenabschnitt (24), der sowohl mit dem Oberleder- als auch mit dem Quartierabschnitt (16, 20) verbunden ist, um die Ferse (19) eines Tiers und die Fläche unter den Afterklauen (27) mindestens teilweise zu umschließen;
wobei das Material des Schuhs (12) am Fersenabschnitt (24) relativ verformbarer ist als das Material des Schuhs an einem beliebigen der Sohlen-, Oberleder- oder Quartierabschnitte (14, 16, 20); und **dadurch gekennzeichnet, dass** der vorderste Teil (18) des Oberlederabschnitts (16) in separate mediale und laterale Bereiche (18a, 18b) unterteilt ist, um die medialen bzw. lateralen Klauen eines Tiers aufzunehmen.

2. Therapeutischer Schuh (12) nach Anspruch 1, wobei der Anstieg der relativen Verformbarkeit des Fersenabschnitts (24) durch Reduzieren der Dicke und/oder Erhöhen der Elastizität des Materials des Schuhs (12) am Fersenabschnitt relativ zu dem des Schuhs an einem beliebigen der Sohlen-, Oberleder- oder Quartierabschnitte (14, 16, 20) erzielt wird.

3. Therapeutischer Schuh (12) nach Anspruch 2, wobei das relativ dünnere Material des Schuhs am Fersenabschnitt (24) eine variable Dicke aufweist; und wobei ein Abschnitt davon, der den Afterklauen (27) am nächsten liegt, relativ dünner und flexibler ist als das Material des restlichen Fersenabschnitts (24).

4. Therapeutischer Schuh (12) nach einem der vorstehenden Ansprüche, wobei die Erhöhung der relativen Verformbarkeit des Fersenabschnitts (24) durch Überdimensionieren des Fersenabschnitts erzielt wird.

5. Therapeutischer Schuh (12) nach einem der vorstehenden Ansprüche, wobei das Material des Schuhs am Sohlenabschnitt (14) relativ dicker und/oder steifer ist als das Material eines beliebigen anderen Teils des Schuhs.

6. Therapeutischer Schuh (12) nach einem der vorstehenden Ansprüche, wobei eine Hilfsverbindung zwischen den medialen und lateralen Bereichen (18a, 18b) bereitgestellt ist, um deren physischer Trennung standzuhalten und/oder zu sie zu begrenzen.

7. Therapeutischer Schuh (12) nach Anspruch 6, wobei die Hilfsverbindung in Form eines Gewebes (32b) vorliegt, verbunden zwischen entgegengesetzten inneren Oberflächen der medialen und lateralen Bereiche (18a, 18b).

8. Therapeutischer Schuh (12) nach Anspruch 6, wobei die Hilfsverbindung in Form eines Bandes (32a) vorliegt, verbunden zwischen den medialen und lateralen Bereichen (18a, 18b).

9. Therapeutischer Schuh (12) nach einem der vorstehenden Ansprüche, wobei eine verschließbare Öffnung (28) auf der Vorderseite des Schuhs bereitgestellt ist.

10. Therapeutischer Schuh (12) nach Anspruch 9, wobei die verschließbare Öffnung (28) die Vorderseite des Oberleder- und/oder Quartierabschnitts (16, 20) überlagert.

11. Therapeutischer Schuh (12) nach einem der vorstehenden Ansprüche, wobei der gesamte Schuh einstückig aus einem einzigen Stück Gummi oder Elastomermaterial gebildet ist.

12. Therapeutischer Schuh (12) nach Anspruch 11, wobei der Gummi oder das Elastomermaterial atmungsaktiv ist.

13. Therapeutischer Schuh (12) nach einem der vorstehenden Ansprüche, wobei ein integraler oder separierbarer Beinabschnitt mit dem Quartier- und Fersenabschnitt (20, 24) verbunden ist, um die Afterklauen (27) eines Tiers und mindestens einen Teil seines Beins oberhalb der Afterklauen zu umschließen.

14. Therapeutischer Schuh (12) nach Anspruch 13, wobei zwei Öffnungen (32) in einem hinteren Teil des Beinabschnitts bereitgestellt sind, die den Positionen der Afterklauen (27) entsprechen.

## Revendications

1. Sabot thérapeutique (12) pour des animaux à sabot fendu en lactation, ledit sabot thérapeutique comprenant :
une partie semelle (14) pour supporter des côtés inférieurs des griffes médiale et latérale d'un animal ;
une partie d'empeigne (16) reliée à la partie semelle (14) pour envelopper au moins partiellement une paroi de sabot d'animal entre son pied, son talon (19) et sa bande coronaire (17) ;
une partie de quart (20) reliée à la partie d'empeigne (16) pour envelopper au moins partiellement les sections de paturon avant et latérale d'un animal (22) ; et
une partie talon (24) reliée à la fois à la partie d'empeigne et à la partie de quart (16, 20) pour envelopper au moins partiellement un talon d'animal (19) et la zone se trouvant sous les ergots (27) ;
dans lequel le matériau du sabot (12) au niveau de ladite partie talon (24) est relativement plus déformable que le matériau du sabot au niveau de l'une quelconque desdites partie semelle, d'empeigne ou de quart (14, 16, 20) ; et **caractérisé en ce que** la partie antérieure (18) de la partie d'empeigne (16) est divisée en sections médiale et latérale séparées (18a, 18b) pour recevoir respectivement les griffes médiale et latérale d'un animal.

2. Sabot thérapeutique (12) selon la revendication 1, dans lequel l'augmentation dans une déformabilité relative de la partie talon (24) est obtenue en réduisant l'épaisseur et/ou en augmentant l'élasticité du matériau du sabot (12) au niveau de ladite partie talon par rapport à celle du sabot au niveau de l'une quelconque desdites parties semelle, d'empeigne ou de quart (14, 16, 20).

3. Sabot thérapeutique (12) selon la revendication 2, dans lequel le matériau relativement plus mince du sabot au niveau de ladite partie talon (24) a une épaisseur variable; et dans lequel une partie de celle-ci la plus proche des ergots (27) est relativement plus mince et plus flexible que le matériau du reste de la partie talon (24).

4. Sabot thérapeutique (12) selon l'une quelconque des revendications précédentes, dans lequel l'augmentation de la déformabilité relative de la partie talon (24) est obtenue en surdimensionnant la partie talon.

5. Sabot thérapeutique (12) selon l'une quelconque des revendications précédentes, dans lequel le matériau du sabot au niveau de ladite partie semelle (14) est relativement plus épais et/ou plus rigide que le matériau de toute autre partie du sabot.

6. Sabot thérapeutique (12) selon l'une quelconque des revendications précédentes, dans lequel une connexion auxiliaire est prévue entre les sections médiale et latérale (18a, 18b) pour résister et/ou limiter leur séparation physique.

7. Sabot thérapeutique (12) selon la revendication 6, dans lequel la connexion auxiliaire est sous la forme d'une toile (32b) reliée entre des surfaces internes opposées des sections médiale et latérale (18a, 18b).

8. Sabot thérapeutique (12) selon la revendication 6, dans lequel la connexion auxiliaire est sous la forme d'une bande (32a) reliée entre les sections médiale et latérale (18a, 18b).

9. Sabot thérapeutique (12) selon l'une quelconque des revendications précédentes, dans lequel une ouverture pouvant être scellée (28) est prévue sur le devant du sabot.

10. Sabot thérapeutique (12) selon la revendication 9, dans lequel l'ouverture pouvant être scellée (28) recouvre l'avant de la/des partie(s) d'empeigne et/ou de quart (16, 20).

11. Sabot thérapeutique (12) selon l'une quelconque des revendications précédentes, dans lequel le sabot entier est formé d'un seul tenant à partir d'une pièce unique de caoutchouc ou de matériau élastomère.

12. Sabot thérapeutique (12) selon la revendication 11, dans lequel le caoutchouc ou le matériau élastomère est perméable à l'air.

13. Sabot thérapeutique (12) selon l'une quelconque des revendications précédentes, dans lequel une partie de jambe intégrale ou séparable est reliée aux parties de quart et talon (20, 24) pour envelopper les ergots (27) d'un animal et au moins une partie de sa jambe au-dessus desdits ergots.

14. Sabot thérapeutique (12) selon la revendication 13, dans lequel deux ouvertures (32) sont prévues dans une partie arrière de la partie de jambe correspondant aux positions des ergots (27).
